(19) Europäisches Patentamt
European Patent Office
Office européen des brevets

(11) Veröffentlichungsnummer: **0 377 118 B1**

(12) **EUROPÄISCHE PATENTSCHRIFT**

(45) Veröffentlichungstag der Patentschrift: **20.04.94**

(51) Int. Cl.5: **C04B 41/87**, C04B 35/58

(21) Anmeldenummer: **89122059.2**

(22) Anmeldetag: **29.11.89**

(54) **Hochfeste Verbundkeramik, Verfahren zu ihrer Herstellung sowie ihre Verwendung.**

(30) Priorität: **03.12.88 DE 3840780**
**15.12.88 DE 3842198**

(43) Veröffentlichungstag der Anmeldung:
**11.07.90 Patentblatt 90/28**

(45) Bekanntmachung des Hinweises auf die Patenterteilung:
**20.04.94 Patentblatt 94/16**

(84) Benannte Vertragsstaaten:
**CH DE FR GB LI**

(56) Entgegenhaltungen:
**EP-A- 0 315 907**
**WO-A-86/06377**
**GB-A- 1 197 546**
**GB-A- 2 002 734**
**US-A- 3 853 567**
**US-A- 4 267 211**
**US-A- 4 720 532**

**I. Amer. Ceram. Soc. vol. 66 (1983), C13-14. D. Seyferth et al. "A liquid Silazane Precursor to Silicon Nitride"**

(73) Patentinhaber: **HOECHST AKTIENGESELLSCHAFT**

**D-65926 Frankfurt(DE)**

(72) Erfinder: **Peuckert, Marcellus, Dr.**
**Platanenweg 8**
**D-6238 Hofheim am Taunus(DE)**
Erfinder: **Brück, Martin**
**Haneckstrasse 8**
**D-6238 Hofheim am Taunus(DE)**
Erfinder: **Vaahs, Tilo, Dr.**
**Am Flachsland 54**
**D-6233 Kelkheim (Taunus)(DE)**
Erfinder: **Kleiner, Hans-Jerg, Dr.**
**Altkönigstrasse 11a**
**D-6242 Kronberg/Taunus(DE)**
Erfinder: **Aldinger, Fritz, Dr.**
**Barbarossastrasse 44**
**D-6458 Rodenbach(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine hochfeste Verbundkeramik, insbesondere auf Basis von Siliziumnitrid, ein Verfahren zu ihrer Herstellung sowie ihre Verwendung.

Hochfeste Verbundkeramiken werden wegen ihrer hohen Festigkeit, Korrosions- und Temperaturbeständigkeit in zunehmenden Mengen im Maschinenbau verwendet.

Siliziumnitrid-Keramik kann durch Reaktionssintern von Formkörpern aus Siliziumpulver in Stickstoffatmosphäre erhalten werden kann. Die so hergestellte "reaktionsgebundene Siliziumnitrid-Keramik" (RBSN) besteht aus kristallinem $\alpha$- und $\beta$-$Si_3N_4$ und hat eine Restporosität von 20 - 30 Vol.-%. Die Biegefestigkeit der RBSN-Keramik ist jedoch begrenzt; im allgemeinen liegen die Werte bei 150 bis 300 MPa.

Die Biegefestigkeit von RBSN-Keramik kann durch Infiltration mit in Lösungsmitteln gelösten Polysilazanen und deren anschließende thermische Zersetzung verbessert werden, siehe JP-OS 62-230 673. Nachteilig bei diesem Verfahren ist der Einsatz von Lösungsmitteln. Die Lösungsmittel füllen einen gewissen Raumanteil, der daher nicht von den Polysilazanen ausgefüllt werden kann und deshalb als freies Porenvolumen nach der Zersetzung der Polysilazane verbleibt. Es hat sich weiter gezeigt, daß durch die Benutzung von Lösungsmitteln ein Verschluß der Poren an der Oberfläche erfolgt. Daher können die noch freien Poren im Innern der Matrix auch durch Wiederholung der Infiltration nicht ausreichend mit Polysilazanen gefüllt werden.

Es bestand daher die Aufgabe, ein Verfahren zur Herstellung von hochfesten Verbundkeramiken zu finden, mit dem möglichst alle Poren einer Matrix, nicht nur die Poren an der Oberfläche, mit Polysilazanen aufgefüllt und damit die Dichte der Matrix erhöht werden kann. Es ist bekannt, daß die Biegefestigkeit bei Verbundkeramik mit steigender Dichte der Matrix zunimmt.

Aus US-A-4 720 532 und J. Amer. Ceram. Soc. Vol. 66 (1983), C13 ist bekannt, Polysilazane durch Pyrolyse in keramische Materialien umzuwandeln. Nach dem letztgenannten Dokument wäre es bei der Infiltration poröser Körper wünschenswert, über ein flüssiges Polysilazan zu verfügen.

Aus US-A-3 853 567 ist die Infiltration poröser Körper mit gewissen schmelzflüssigen Polysilazanen und anschließende Pyrolyse bekannt. Viele Polysilazane sind jedoch nicht schmelzbar; daher besteht Bedarf nach schmelzbaren Polysilazanen, die für die genannte Infiltration und Pyrolyse geeignet sind.

Ein Gegenstand der vorliegenden Erfindung ist ein Verfahren zur Herstellung einer hochfesten Verbundkeramik, das dadurch gekennzeichnet ist, daß man in einem ersten Schritt in eine offenporige Matrix ein schmelzflüssiges Polysilazan der Formel (I)

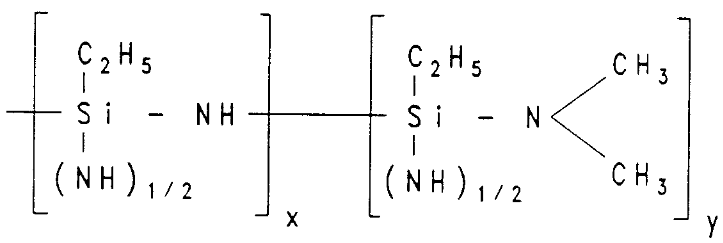

infiltriert, worin x und y die Molfraktionen der beiden Struktureinheiten bedeuten und wobei x + y = 1 und x = 0,7 bis 0,95 ist und in einem zweiten Schritt die infiltrierte Matrix unter Schutzgas auf 800 bis 2500 °C erhitzt. -

Die Herstellung des genannten Polysilazans wird in DE-A-37 37921 (EP-A-315 907) beschrieben. Diese Anmeldung betrifft allgemein die Herstellung von polymeren Silazanen, indem man ein oder mehrere Dialkylaminoorganyldichlorsilane der Formel $RSiCl_2$-NR'R', worin R = $C_1$-$C_4$-Alkyl, Vinyl oder Phenyl und R' = $C_1$-$C_4$-Alkyl ist, mit mindestens 3,35 Mol Ammoniak pro Mol Silan in einem Lösungsmittel bei Temperaturen von -80 bis + 70 °C umsetzt.

Das als Ausgangsprodukt für die polymeren Silazane der Formel (I) eingesetzte Dimethylaminoethyldichlorsilan $C_2H_5SiCl_2$-$N(CH_3)_2$ (im folgenden auch als "Aminochlorsilan" bezeichnet) kann nach S.S. Washburne, W.R. Peterson, J. Organometal. Chem. 21, (1970), Seite 59 erhalten werden, indem man Ethyltrichlorsilan $C_2H_5SiCl_3$ mit Dimethylamin umsetzt. Die Umsetzung wird in aprotischen Lösungsmitteln, vorzugsweise polaren wie Ethern, insbesondere in THF durhgeführt.

Das Molverhältnis von Ethyltrichlorsilan zu Dimethylamin kann Werte zwischen 1:1 und 1:3 annehmen, bevorzugt wird ein Verhältnis von etwa 1:2.

Die bei der Reaktion entstehenden Ammoniumsalze fallen aus der Reaktionslösung aus, während das gebildete Aminochlorsilan in Lösung bleibt.

Das erhaltene Aminochlorsilan der Formel $C_2H_5SiCl_2$-$N(CH_3)_2$ wird pro Mol mit mindestens 3,35 Mol, vorzugsweise mit mindestens 3,5 Mol Ammoniak in aprotischen Lösungsmitteln, vorzugsweise polaren wie Ethern, insbesondere THF umgesetzt. Dies geschieht bei Temperaturen zwischen -80 °C und +70 °C, bevorzugt bei -10 °C bis 0 °C.

Das entstehende polymere Silazan der Formel (I) löst sich in allen gängigen aprotischen Lösungsmitteln vollständig.

Si ist in Formel (I) nie direkt mit Si verbunden, sondern immer über eine NH-Brücke. Ist beispielsweise x = 0,9 (und damit y = 0,1), so sind 10 % der ursprünglich vorhandenen Dimethylaminogruppen im Polymeren noch enthalten, 90 % der Siliziumatome sind dreifach über NH-Brücken vernetzt. Das steuerbare Verhältnis von x zu y bestimmt den Vernetzungsgrad und damit die Viskosität und die Verarbeitbarkeit zur Keramik.

Dabei erhält man Werte von x = 0,7 - 0,95 (y = 0,3 - 0,05), wenn man mindestens 3,35 Mol $NH_3$ pro Mol Aminochlorsilan verwendet. Vorzugsweise ist x = 0,85 - 0,95 (y = 0,15 - 0,05); dies ist dann der Fall, wenn man mindestens 3,5 Mol $NH_3$ pro Mol Aminochlorsilan verwendet. Im allgemeinen verwendet man höchstens 8 Mol, vorzugsweise höchstens 6 Mol $NH_3$ pro Mol Aminochlorsilan. Natürlich führt auch eine größere relative Menge $NH_3$ als 8 Mol zum Erfolg, aber dieser höhere Aufwand ist überflüssig.

Als Schutzgas bei der Erhitzung der infiltrierten Matrix eignet sich beispielsweise Stickstoff, Edelgase, Gemische dieser Gase oder Gase die zumindest hauptsächlich aus Stickstoff oder Edelgasen bestehen.

Die Temperatur dabei beträgt 800 °C bis 2500 °C, vorzugsweise 1000 °C bis 2000 °C. Dabei wird im allgemeinen unter Normaldruck oder einem Überdruck bis etwa 150 bar gearbeitet.

Weiter kann man Füllstoffe, vorzugsweise Verbindungen des Magnesiums, Aluminiums, Yttriums oder eines seltenen Erdenmetalls einzeln oder im Gemisch in dem geschmolzenen Polysilazan lösen und die Matrix mit dieser Schmelze statt mit reinem Polysilazan infiltrieren. Besonders geeignete Verbindungen sind hierfür die Nitrate, Alkoholate, Acetate oder Acetylacetonate einzeln oder als Gemisch.

Im allgemeinen genügt eine einmalige Infiltration der Matrix mit schmelzflüssigem Polysilazan mit anschließender Erhitzung. In manchen Fällen kann man jedoch durch ein oder mehrmalige Wiederholung der Sequenz Infiltration-Erhitzen eine noch höhere Matrixdichte erreichen, was von Vorteil ist.

Als offenporige Matrizen sind beispielsweise Formkörper aus Oxiden, Nitriden, Oxinitriden, Carbiden, Siliziden, Silikaten, Phosphiden oder Boriden geeignet.

Besonders gute Ergebnisse werden erzielt, wenn man als offenporige Matrix einen Formkörper aus Siliziumnitrid verwendet.

Die erfindungsgemäß hergestellte hochfeste Verbundkeramik - insbesondere die eben erwähnte, auf Basis einer Siliziumnitrid-Matrix hergestellte - kann als Bauteil oder Verschleißteil für hohe thermische, mechanische oder korrosive Beanspruchung verwendet werden. Man kann sie, wenn gewünscht, durch einen Heiß-Preßsinter-Schritt noch weiter verdichten.

Von Vorteil bei dem erfindungsgemäßen Verfahren ist es, daß während der Verarbeitung das schmelzflüssige Polysilazan weder durch Gelbildung altert, noch vernetzt oder Blasen bildet.

Die Gesamtporosität der Matrix errechnet sich durch Division der gemessenen Matrix-Dichte durch die theoretische Dichte der kompakten Matrix. Für eine reine Siliziumnitrid-Verbundkeramik (RBSN) gilt also:

$$\text{Gesamtporosität in \%} = \frac{100 \cdot \text{gemessene Dichte (g/ml)}}{3{,}185\ \text{(g/ml)}}$$

Die offene Porosität wurde mit dem Porosimeter 2000 der Firma Carlo Erba Strumentazione bestimmt. Die Bestimmungsmethode ist beschrieben in "Experimental Methods in Catalytic Research" R.B. Anderson, Academic Press, New York 1968, S. 45 ff.

Die Biegefestigkeit wurde auf der Universalprüfmaschine Instron 1326 als 4-Punkt-Biegebruchfestigkeit nach der USA Norm Mil.-STD 1942 gemessen:
4-Punkt-Auflager mit 40 mm/20 mm Stützabstand und konstanter Krafterhöhung von 500 N/s an Probekörpern mit den Maßen 3,5 mm • 4,5 mm • 45 mm.

Es hat sich gezeigt, daß besonders große Biegefestigkeiten von Verbundkeramik gemäß dem erfindungsgemäßen Verfahren dann resultieren, wenn die zu infiltrierende Matrix in einem Autoklaven zunächst im Vakuum entgast wird und dann das zunächst als Feststoff im Autoklaven vorgelegte Polysilazan geschmolzen wird. Danach wird in den Autoklaven Schutzgas eingepreßt. Im allgemeinen sind hierbei

Überdrücke bis 500 bar, insbesondere von 1 bis 50 bar, völlig ausreichend.

Bei der Erhitzung der infiltrierten Matrix können im Prinzip Temperaturen bis zu 2500 °C angewendet werden. Bei Temperaturen ab etwa 1600 °C muß dann aber, zur Vermeidung der Zersetzung des $Si_3N_4$, unter hohem Stickstoffdruck gearbeitet werden. Deshalb ist es im allgemeinen günstiger, die infiltrierte Matrix nur auf 1100 bis 1400 °C zu erhitzen. Hierbei wird aus dem Polysilazan ein Zersetzungsprodukt gebildet, das etwa folgende Zusammensetzung hat:

45 ± 5 (%) Si
30 ± 5 (%) N
25 ± 5 (%) C
3 ± 2 (%) O

Statt unter Schutzgasen wie Stickstoff oder Edelgas zu arbeiten, kann man die infiltrierte Matrix auch in Ammoniak-Atmosphäre erhitzen, wobei eine Temperatur von 800 bis 1500 °C zu wählen ist. Dies ist ein weiterer Gegenstand der vorliegenden Erfindung.

Das Polysilazan wird hierbei in $Si_3N_4$ mit geringem Kohlenstoffgehalt überführt. Zwischenstufen zwischen $Si_3N_4$ und dem Zersetzungsprodukt der zuvor genannten Zusammensetzung werden erhalten, wenn unter Stickstoff und Ammoniak gearbeitet, die Zersetzungstemperatur bei etwa 800 bis 1500 °C und die Zersetzungsdauer kurz gewählt wird.

Ein weiterer Gegenstand der vorliegenden Erfindung ist die Herstellung einer hochfesten Siliziumnitrid-Verbundkeramik (RBSN) mit einem Kohlenstoffgehalt von unter 0,5 Gew.-%, einem Sauerstoffgehalt von unter 4 Gew.-% und einer offenen Porosität von weniger als 10 %, dadurch gekennzeichnet, daß man in einem ersten Schritt in eine Siliziumnitrid-Matrix mit einer offenen Porosität von 10 bis 30 % ein schmelzflüssiges Polysilazan der Formel (I)

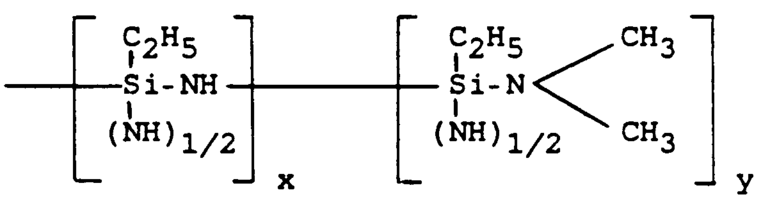

infiltriert, worin x und y die Molfraktionen der beiden Struktureinheiten bedeuten und wobei x + y = 1 und x = 0,7 - 0,95 ist, und in einem zweiten Schritt die infiltrierte Matrix unter ammoniakhaltigem Gas auf 800 bis 1500 °C erhitzt.

Bei der Zersetzung des Polysilazans unter Ammoniak als Schutzgas wird eine weiße bis hellgrau gefärbte Verbundkeramik erhalten; in Stickstoff- oder Edelgasatmosphäre resultiert eine dunkel gefärbte Verbundkeramik.

Nach der Zersetzung des Polysilazans sind noch etwa 60 bis 70 % des anfänglich infiltrierten Polysilazan-Gewichtes in der Matrix. Da beim erfindungsgemäßen Verfahren die Matrix an der Oberfläche offenporig bleibt, kann durch wiederholte Infiltrations-Zersetzungs-Schritte die Matrix-Dichte weiter erhöht werden.

Die Kristallinität des durch Zersetzung gebildeten Siliziumnitrids ist über die Zersetzungstemperatur steuerbar:

Bei einer Zersetzungstemperatur zwischen 800 und etwa 1200 °C entsteht amorphes Siliziumnitrid; oberhalb einer Zersetzungstemperatur von etwa 1200 °C entsteht kristallines $\alpha$-Siliziumnitrid, das sich bei langer Erhitzungsdauer und oberhalb etwa 1500 °C in $\beta$-Siliziumnitrid umwandelt.

Bei der Infiltration von Polysilazan in eine Siliziumnitrid-Matrix zusammen mit Füllstoffen können etwa 0,05 bis 0,6 mol des Füllstoffs pro 100 g fertiger Formkörper in die Matrix eingebracht werden.

Durch einen zusätzlichen Heiß-Preßsinter-Schritt an der erfindungsgemäßen $Si_3N_4$-Verbundkeramik sind Biegefestigkeiten von 500 bis 600 MPa erreichbar.

Die Beispiele erläutern die Erfindung:

**Beispiel 1**

Ein Formkörper aus reaktionsgebundenem Siliziumnitrid (RBSN) mit 17,0 % offener Porosität, einer Dichte von 2,43 g/ml und den Abmessungen 3,5 mm•4,5 mm•45mm wird zusammen mit 50 g Polysilazan der Formel (I) mit x = 0,9 und y = 0,1 in einem Autoklaven bis auf 0,001 bar evakuiert, anschließend auf

80 °C erwärmt und mit Stickstoff unter einen Druck von 30 bar gesetzt. Nach 5 Stunden wird auf Raumtemperatur abgekühlt und der Autoklav entspannt. Der Formkörper wird durch Schleifen von anhaftendem Polysilazan befreit und in strömendem Stickstoff (10 l/h $N_2$) innerhalb von 10 Stunden bis auf 1100 °C erhitzt, 1 Stunde bei dieser Temperatur gehalten und auf Raumtemperatur abgekühlt.

Die Dichte des infiltrierten und erhitzten Formkörpers wurde mit 2,74 g/ml gemessen, die 4-Punkt-Biegebruchfestigkeit wurde mit 347 MPa ermittelt. Das als Ausgangsmaterial eingesetzte RBSN hatte dagegen nur eine 4-Punkt-Biegebruchfestigkeit von 188 MPa.

**Beispiel 2**

Es wurde ein Verbundkeramik-Formkörper wie in Beispiel 1 hergestellt. Der Formkörper wurde sodann erneut zusammen mit dem gleichen Polysilazan wie in Beispiel 1 im Autoklaven bis auf 0,001 bar evakuiert, anschließend auf 80 °C erwärmt, mit Stickstoff unter einen Druck von 30 bar gesetzt und weiter, wie im Beispiel 1 beschrieben, behandelt.

Die Dichte des Formkörpers wurde mit 2,87 g/ml bestimmt. Die 4-Punkt-Biegebruchfestigkeit betrug 420 MPa.

**Beispiel 3**

Beispiel 2 wurde wiederholt mit der Änderung, daß jetzt der Formkörper ein drittes Mal mit Polysilazan infiltriert wurde. Die Polysilazan-Zersetzung wurde danach in gleicher Weise wie in Beispiel 1 und 2 vorgenommen.

Die Stoffparameter sind in der Tabelle zusammengestellt. Zur Verdeutlichung der vorgelegten Erfindung wurden die Stoffparameter der Ausgangsmatrix und die der Verbundkeramiken der Beispiele 1 und 2 zusätzlich in die Tabelle aufgenommen.

Tabelle

| | Ausgangsmatrix | Beispiel | | |
|---|---|---|---|---|
| | | 1 | 2 | 3 |
| Gesamtporosität (%) | 23,8 | 14,3 | 10,4 | 8,8 |
| Offene Porosität (%) | 17,0 | 6,9 | 2,7 | 0,9 |
| Dichte (g/ml) | 2,43 | 2,74 | 2,87 | 2,92 |
| 4-Punkt-Biegebruchfestigkeit (30/20) (MPa) | 188 | 347 | 420 | 463 |

**Beispiel 4**

Beispiel 1 wurde wiederholt mit der Änderung, daß jetzt der Autoklav mit Stickstoff unter einen Druck von 10 bar gesetzt wurde. Der infiltrierte Formkörper wurde in strömendem Ammoniak (10 l/h) innerhalb von 10 Stunden bis auf 1150 °C unter einem Ammoniak-Druck von 5 bar erhitzt und 3 Stunden lang bei dieser Temperatur gehalten. Der auf Raumtemperatur abgekühlte Formkörper war weiß-grau gefärbt und hatte eine Dichte von 2,48 g/ml, sowie eine 4-Punkt-Biegefestigkeit von 331 MPa.

Die Analyse ergab:

0,32 Gew.-% C

2,9 Gew.-% O.

Die offene Porosität wurde mit 7,2 %, der Anteil des amorph eingelagerten $Si_3N_4$ mit 6 Gew.-% ermittelt.

**Patentansprüche**

1. Verfahren zur Herstellung einer hochfesten Verbundkeramik, dadurch gekennzeichnet, daß man in einem ersten Schritt in eine offenporige Matrix ein schmelzflüssiges Polysilazan der Formel (I)

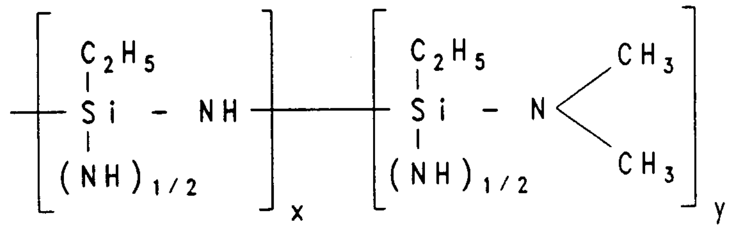

infiltriert, worin x und y die Molfraktionen der beiden Struktureinheiten bedeuten und wobei x + y = 1 und x = 0,7 bis 0,95 ist, und in einem zweiten Schritt die infiltrierte Matrix unter Schutzgas auf 800 bis 2500 °C erhitzt.

2. Verfahren nach Anspruch 1, dadurch gekennzeichnet, daß man als Schutzgas Stickstoff oder ein Edelgas oder eine Mischung aus diesen Gasen verwendet.

3. Verfahren nach Anspruch 1 oder 2, dadurch gekennzeichnet, daß man die infiltrierte Matrix auf 1000 bis 2000 °C erhitzt.

4. Verfahren zur Herstellung einer hochfesten Verbundkeramik, dadurch gekennzeichnet, daß man in einem ersten Schritt in eine offenporige Matrix ein schmelzflüssiges Polysilazan der Formel (I)

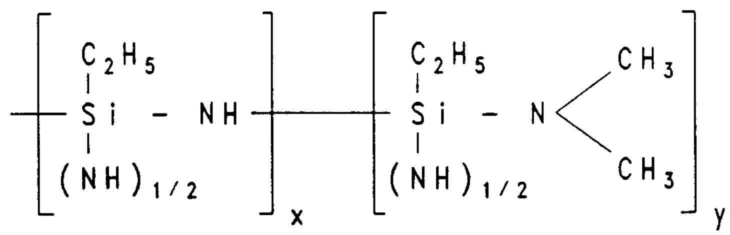

infiltriert, worin x und y die Molfraktionen der beiden Struktureinheiten bedeuten und wobei x + y = 1 und x = 0,7 bis 0,95 ist, und in einem zweiten Schritt die infiltrierte Matrix unter ammoniakhaltigem Gas auf 800 bis 1500 °C erhitzt.

5. Verfahren nach einem der Ansprüche 1 bis 4, dadurch gekennzeichnet daß man als offenporige Matrix einen Formkörper aus Oxid, Nitrid, Oxinitrid, Carbid, Silizid, Silikat, Phosphid und/oder Borid verwendet.

6. Verfahren nach einem der Ansprüche 1 bis 5, dadurch gekennzeichnet, daß man als offenporige Matrix einen Formkörper aus Siliziumnitrid verwendet.

7. Verfahren nach einem der Ansprüche 1 bis 6, dadurch gekennzeichnet, daß man in dem schmelzflüssigen Polysilazan vor der Infiltration einen Füllstoff löst.

8. Verfahren nach Anspruch 7, dadurch gekennzeichnet daß man als Füllstoff Verbindungen von Magnesium, Aluminium, Yttrium oder einem seltenen Erdenmetall einzeln oder als Gemisch einsetzt.

9. Verfahren nach Anspruch 8, dadurch gekennzeichnet daß man als Verbindungen der genannten Metalle die Nitrate, Alkoholate, Acetate oder Acetylacetonate einzeln oder als Gemisch einsetzt.

10. Verfahren nach einem der Ansprüche 1 bis 9, dadurch gekennzeichnet, daß man die Sequenz aus Infiltration und Erhitzung an derselben Matrix ein oder mehrmals wiederholt.

11. Verfahren zur Herstellung einer hochfesten Siliziumnitrid-Verbundkeramik mit einem Kohlenstoffgehalt von unter 0,5 Gew.-%, einem Sauerstoffgehalt von unter 4 Gew.-% und einer offenen Porosität von weniger als 10 %, dadurch gekennzeichnet, daß man in einem ersten Schritt in eine Siliziumnitrid-Matrix mit einer offenen Porosität von 10 bis 30 % ein schmelzflüssiges Polysilazan der Formel

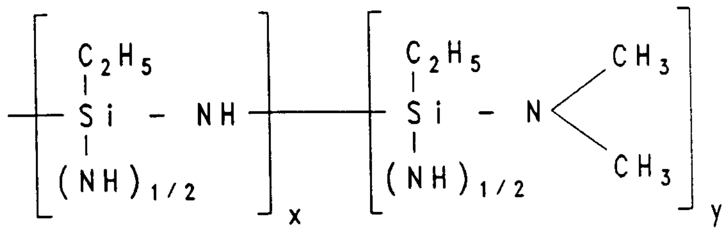

infiltriert, worin x und y die Molfraktion der beiden Struktureinheiten bedeuten und wobei x + y = 1 und x = 0,7 bis 0,95 ist, und in einem zweiten Schritt die infiltrierte Matrix unter ammoniakhaltigem Gas auf 800 bis 1500 ° C erhitzt.

**12.** Verfahren nach einem der Ansprüche 1 bis 11, dadurch gekennzeichnet daß man die hergestellte hochfeste Verbundkeramik durch einen anschließenden Heiß-Preßsinter-Schritt weiter verdichtet.

## Claims

**1.** A process for the preparation of a high-strength ceramic composite, which comprises, in a first stop, impregnating an open-pore matrix with a molten polysilazane of the formula (I)

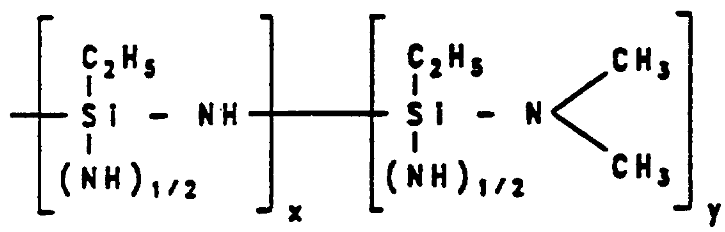

in which x and y denote the mole fractions of the two structural units and where x + y = 1 and x = 0.7 - 0.95 and, in a second step, heating the impregnated matrix to 800 to 2500 ° C under a blanketing gas.

**2.** The process as claimed in claim 1, wherein nitrogen or a noble gas or a mixture of these gases is used as the blanketing gas.

**3.** The process as claimed in claim 1 or 2, wherein the impregnated matrix is heated to 1000 to 2000 ° C.

**4.** A process for the preparation of a high-strength ceramic composite, which comprises, in a first step, impregnating an open-pore matrix with a molten polysilazane of the formula (I)

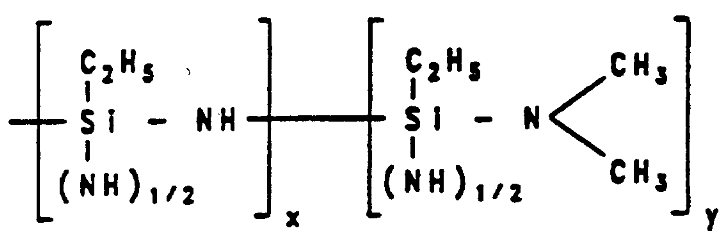

in which x and y denote the mole fractions of the two structural units and where x + y = 1 and x = 0.7 - 0.95 and, in a second step, heating the impregnated matrix to 800 to 1500 ° C under a gas containing ammonia.

5. The process as claimed in one of claims 1 to 4, wherein a shaped article made from oxide, nitride, oxynitride, carbide, silicide, silicate, phosphide and/or boride is used as the open-pore matrix.

6. The process as claimed in one of claims 1 to 5, wherein a shaped article made from silicon nitride is used as the open-pore matrix.

7. The process as claimed in one of claims 1 to 6, wherein a filler is dissolved in the molten polysilazane before the impregnation.

8. The process as claimed in claim 7, wherein compounds of magnesium, aluminum, yttrium or a rare earth metal are used singly or as a mixture as the filler.

9. The process as claimed in claim 8, wherein the nitrates, alcoholates, acetates or acetylacetonates are used singly or as a mixture as compounds of the named metals.

10. The process as claimed in one of claims 1 to 9, wherein the impregnation and heating sequence is repeated one or more times on the same matrix.

11. A process for the preparation of a high-strength silicon nitride ceramic composite with a carbon content of under 0.5 % by weight, an oxygen content of under 4 % by weight and an open porosity of less than 10 %, which comprises impregnating a silicon nitride matrix having an open porosity of 10 to 30 % in a first step with a molten polysilazane of the formula

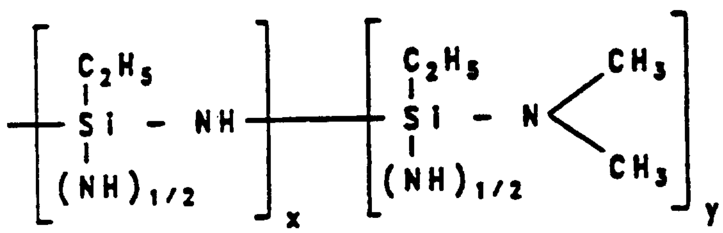

in which x and y denote the mole fractions of the two structural units and where x + y = 1 and x = 0.7 - 0.95 and, in a second step, heating the impregnated matrix to 800 to 1500 °C under a gas containing ammonia.

12. The process as claimed in one of claims 1 to 11, wherein the high-strength ceramic composite prepared is further compacted by means of a subsequent hot pressure-sinter step.

**Revendications**

1. Procédé de préparation d'une céramique composite très solide, procédé caractérisé en ce que, dans une première opération on infiltre dans une matrice à pores ouverts un polysilazane fondu liquide de formule I :

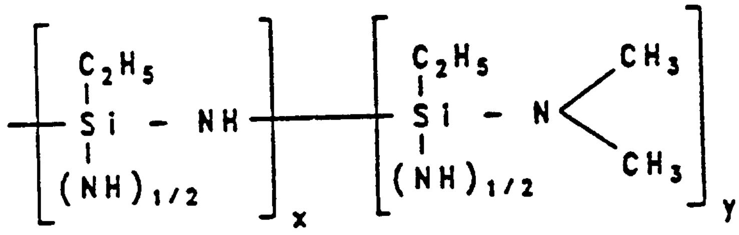

x et y étant les proportions molaires des deux motifs, la somme x + y étant égale à 1 et x compris entre 0,7 et 0,95, et dans une seconde opération on chauffe la matrice infiltrée entre 800 et 2500 °C

sous une atmosphère de gaz protecteur.

2. Procédé selon la revendication 1, caractérisé en ce que le gaz protecteur est de l'azote ou un gaz noble ou un mélange de plusieurs de ces gaz.

3. Procédé selon la revendication 1 ou 2, caractérisé en ce que l'on chauffe la matrice infiltrée entre 1000 et 2000 ° C.

4. Procédé de préparation d'une céramique composite très solide, caractérisé en ce que dans une première opération on infiltre dans une matrice à pores ouverts un polysilazane fondu liquide de formule I :

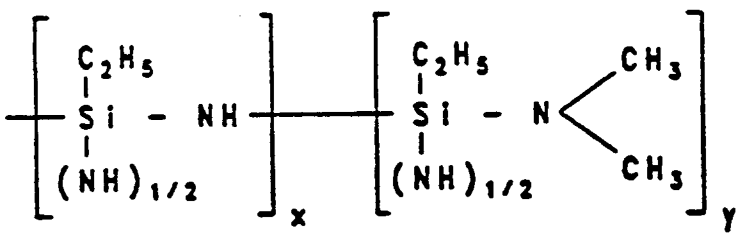

x et y étant les proportions molaires des deux motifs, la somme x + y étant égale à 1 et x compris entre 0,7 et 0,95, et dans une seconde opération on chauffe la matrice infiltrée entre 800 et 1500 ° C sous un gaz contenant de l'ammoniac.

5. Procédé selon l'une des revendications 1 à 4, caractérisé en ce que la matrice à pores ouverts est un objet moulé formé d'oxyde, de nitrure, oxynitrure, carbure, siliciure, silicate, phosphure et/ou borure.

6. Procédé selon l'une des revendications 1 à 5, caractérisé en ce que la matrice à pores ouverts est un objet moulé de nitrure de silicium.

7. Procédé selon l'une des revendications 1 à 6, caractérisé en ce que avant l'infiltration on dissout une charge dans le polysilazane fondu liquide.

8. Procédé selon la revendication 7, caractérisé en ce que l'on ajoute comme charge un composé de magnésium, aluminium, yttrium ou d'un métal des terres rares, pris individuellement ou à plusieurs d'entre eux à la fois.

9. Procédé selon la revendication 8, caractérisé en ce que les composés des métaux indiqués sont des nitrates, alcoolates, acétates ou acétylacétonates, seuls ou en mélanges.

10. Procédé selon l'une des revendications 1 à 9, caractérisé en ce que l'on renouvelle une ou plusieurs fois sur la même matrice les opérations d'infiltration et de chauffage.

11. Procédé de préparation d'une céramique composite très solide de nitrure de silicium à moins de 0,5% en poids de carbone et moins de 4% en poids d'oxygène et moins de 10% de pores ouverts, procédé caractérisé en ce que dans une première opération on infiltre dans une matrice de nitrure de silicium comportant de 10 à 30% de pores ouverts un polysilazane fondu liquide de formule I :

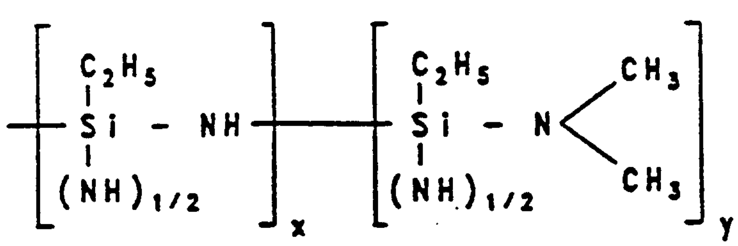

x et y étant les proportions molaires des deux motifs, la somme x + y étant égale à 1 et x compris entre 0,7 et 0,95, et dans une seconde opération on chauffe la matrice ainsi infiltrée sous un gaz contenant de l'ammoniac entre 800 et 1500 °C.

**12.** Procédé selon l'une des revendications 1 à 11, caractérisé en ce que l'on accroît la densité de la céramique composite très solide obtenue par une opération suivante de frittage à chaud sous pression.